# EUROPEAN PATENT APPLICATION

(11) **EP 4 223 107 A1**
(43) Date of publication of application: **09.08.2023**
(21) Application number: 21875431.5
(22) Date of filing: 24.09.2021
(51) Int. Cl.: A01G 7/00

(54) **CULTIVATION ENVIRONMENT CONTROL DEVICE**

(30) Priority: 30.09.2020 JP 2020165576
(71) Applicant: Mirai Co. Ltd., Toshima-Ku Tokyo 1700013 (JP)
(72) Inventor: TAKEMURA, Yoshihiro, Kashiwa-shi, Chiba 277-0881 (JP); FUJIWARA, Daiki, Kashiwa-shi, Chiba 277-0881 (JP); NOZAWA, Nagateru, Kashiwa-shi, Chiba 277-0881 (JP); BANNO, Yoshiyuki, Kumagaya-shi, Saitama 360-0804 (JP); JOUNOUCHI, Yukinari, Kumagaya-shi, Saitama 360-0804 (JP)
(74) Representative: Plougmann Vingtoft a/s
(86) International application number: PCT/JP2021/035125
(87) International publication number: WO 2022/071129

(57) **Abstract**

A cultivation environment control apparatus 1 includes a light illuminator 12 configured to irradiate a plant P with light. The cultivation environment control apparatus 1 includes an airflow generator 13 configured to generate airflow around the plant P. The light illuminator 12 and the airflow generator 13 are intermittently controlled or intensity controlled.

## Description

### Technical Field

The present invention relates to a cultivation environment control apparatus including a light illuminator configured to irradiate a plant with light.

### Background Art

In the cultivation of plants, it is difficult to take measures against sudden natural disasters such as heavy rain and typhoons or climate change in open-field cultivation or greenhouse cultivation. For this reason, it is difficult to make predictions throughout the year, and wholesalers and retailers of vegetables in particular desire the stable production of agricultural products.

Therefore, an indoor cultivation under environmental control, a so-called closed plant factory is attracting attention. However, the cultivation environments such as light, temperature, humidity, and airflow need to be controlled and maintained by inputting artificial energies mainly based on electricity, and hence, if the production volume is the same, the production cost then increases relative to the open-field cultivation. Therefore, there is a demand for a cultivation environment control mechanism which further increases production efficiency and requires small input energies.

An air blowing to plants is known as a method for enhancing production efficiency by homogenizing temperature and humidity among the cultivation environment to prevent leaf browning (tip burn) and by promoting the supply of carbon dioxide to plants to promote the growth of plants. As an embodiment of the air blowing to plants in plant factories, there is known a method of blowing air from the side of the plant (e.g., refer to Patent Literature 1), a method of blowing air from above the plant (e.g., refer to Patent Literature 2), or a method of blowing air from below the plant (e.g., refer to Patent Literature 3).

The methods of environmental control, in particular, of light irradiation and air blowing need to be adjusted according to the kinds of plants in order to maximize the effects of tip burn suppression and of growth promotion. In this case, if the environment control apparatus has a narrow range of modifiable conditions, there is arisen a need to prepare an environment control apparatus different for each kind of the plant or to replace an existing environment control apparatus with a new one, which leads to an increased cultivation cost. Therefore, the environment control apparatus is required to have an extensibility capable to deal with the cultivation of multiple kinds of plants. For example, there are known an example in which an air blower controller is fixed to a cultivation facility (e.g., refer to Patent Literature 4) and an example in which an air blower controller is changeable (refer to Patent Literature 5).

### Citation List

### Patent Literature

Patent Literature 1: JP 6244554 B2
Patent Literature 2: JP 2019-41694 A
Patent Literature 3: JP 2017-205072 A
Patent Literature 4: JP 2012-125196 A
Patent Literature 5: JP 2020-25480 A

### Summary of Invention

### Technical Problem

In a case where air blowing is performed in addition to light irradiation as in the methods described in Patent Literatures 1 and 2, the reduction of energy consumption and an acquirement of the extensibility of cultivation environment control are required.

An object of the present invention is to provide a cultivation environment control apparatus with which the energy consumption can be reduced and there is no need for significant addition or modification of the apparatus after implementation.

### Solution to Problem

The cultivation environment control apparatus according to claim 1, includes: a light illuminator configured to irradiate a plant with light; and an airflow generator configured to generate airflow around the plant, wherein the light illuminator and the airflow generator are intermittently controlled or intensity controlled.

A cultivation environment control apparatus according to claim 2, includes a holding component configured to hold the light illuminator and the airflow generator in the cultivation environment control apparatus according to claim 1, wherein a distance between the holding component and the plant is adjustable.

A cultivation environment control apparatus according to claim 3, wherein in the cultivation environment control apparatus according to claim 1 or 2, the light illuminators are arranged with a gap between each other, and the cultivation environment control apparatus includes an airflow control mechanism by using the gap to allow the airflow generator to generate airflow toward a core of the plant.

A cultivation environment control apparatus according to claim 4, wherein in the cultivation environment control apparatus according to claim 3, the airflow generator allowed by the airflow control mechanism to generate airflow at a predetermined speed of 0.3 m/s or more and 1.5 m/s or less toward a core of the plant.

A cultivation environment control apparatus according to claim 5, wherein in the cultivation environment control apparatus according to any one of claims 1 to 4, the light illuminator includes: white light whose color temperature is 3000 K or more; or red light whose wavelength is 620 nm or more and 700 nm or less, and the cultivation environment control apparatus includes a controller configured to intermittently control the light illuminator so as to be energized and non-energized repeatedly at a predetermined cycle of 10 us or more and 20 ms or less.

A cultivation environment control apparatus according to claim 6, wherein in the cultivation environment control apparatus according to any one of claims 1 to 5, the light illuminators are arranged in pairs, the light illuminator of one of the pair and the light illuminator of the other of the pair are alternately powered from an identical power source.

### Advantageous Effects of Invention

According to the present invention, the energy consumption can be reduced, and there is no need for significant addition or modification of the apparatus after implementation.

### Brief Description of Drawings

Fig. 1 illustrates a cultivation environment control apparatus according to a first embodiment, in which Fig. 1(a) is a cross-sectional view of the cultivation environment control apparatus, and Fig. 1(b) is a perspective view of a part of the cultivation environment control apparatus.
Fig. 2(a) is a plan view illustrating an arrangement of plants in the cultivation environment control apparatus as above, and Fig. 2(b) is a plan view illustrating positions where airflow is generated by an airflow control mechanism.
Fig. 3 is a block diagram illustrating a configuration of the cultivation environment control apparatus as above, in which Fig. 3(a) illustrates one example thereof, Fig. 3(b) illustrates another example thereof, and Fig. 3(c) illustrates still another example thereof.
Fig. 4 is a block diagram schematically illustrating a controller of the cultivation environment control apparatus as above.
Fig. 5(a) is a graph illustrating an example of the temporal change of the voltage in an RC circuit of the same controller as above, Fig. 5(b) is a graph illustrating an example of the temporal change of the voltage in an inverter circuit of the same controller as above, and Fig. 5(c) is a graph illustrating an example of the output voltage from a switch element of the same controller as above.
Fig. 6(a) is a graph illustrating an example of a temporal change in power at a time when the light illuminator is always turned on and a time of pulse control, Fig. 6(b) is a graph illustrating an example of a temporal change in power when an on-off switching cycle of the light illuminator is short, and Fig. 6(c) is a graph illustrating an example of a temporal change in power when an on-off switching cycle of the light illuminator is long.
Fig. 7 is a graph schematically illustrating a temporal change in power consumption in each configuration shown in Fig. 3, in which Fig. 7(a) shows an example corresponding to the example shown in Fig. 3(a), Fig. 7(b) shows an example corresponding to the example shown in Fig. 3(b), and Fig. 7(c) shows an example corresponding to the example shown in Fig. 3(c).
Fig. 8 illustrates a cultivation environment control apparatus according to a second embodiment, in which Fig. 8(a) is a cross-sectional view of the cultivation environment control apparatus, and Fig. 8(b) is a perspective view of a part of the cultivation environment control apparatus.
Fig. 9(a) is a plan view illustrating an arrangement of plants in the same cultivation environment control apparatus as above, and Fig. 9(b) is a plan view illustrating positions where airflow is generated by an airflow generator.
Fig. 10 illustrates a cultivation environment control apparatus according to a third embodiment, in which Fig. 10(a) is a cross-sectional view of the cultivation environment control apparatus, and Fig. 10(b) is a perspective view of a part of the cultivation environment control apparatus.
Fig. 11 illustrates a cultivation environment control apparatus according to a fourth embodiment, in which Fig. 11(a) is a perspective view schematically illustrating a part of the cultivation environment control apparatus, and Fig. 11(b) is a graph schematically illustrating a temporal change in power consumption.

### Description of Embodiments

A first embodiment of the present invention will be described with reference to the drawings.

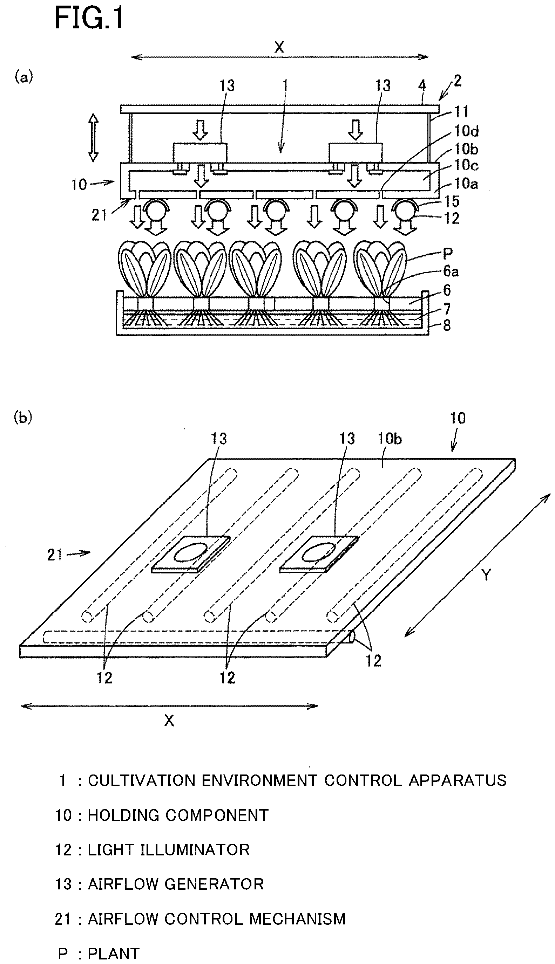

In Fig. 1(a), the reference numeral 1 denotes a cultivation environment control apparatus. The cultivation environment control apparatus 1 is configured to control the cultivation environment such as light, temperature, humidity, and airflow in the hydroponic cultivation of a plant P. The cultivation environment control apparatus 1 is suitably used in a plant factory, in particular a closed plant factory.

The cultivation environment control apparatus 1 is placed on a cultivation shelf 2 where the plants P are arranged. The cultivation shelf 2 is, for example, a multistage cultivation shelf including a frame having a beam 4 which is a support disposed between a plurality of pillars. The temperature and humidity in a room where the cultivation shelf 2 is placed are controlled by an air conditioner. Note that, hereinafter, an up-down direction is defined as a direction in which the stages of the cultivation shelf 2 are layered, a left-right direction is defined as the direction of the arrow X illustrated in Fig. 1(b) and the like, and a front□back direction is defined as the direction of the arrow Y illustrated in Fig. 1(b) and the like.

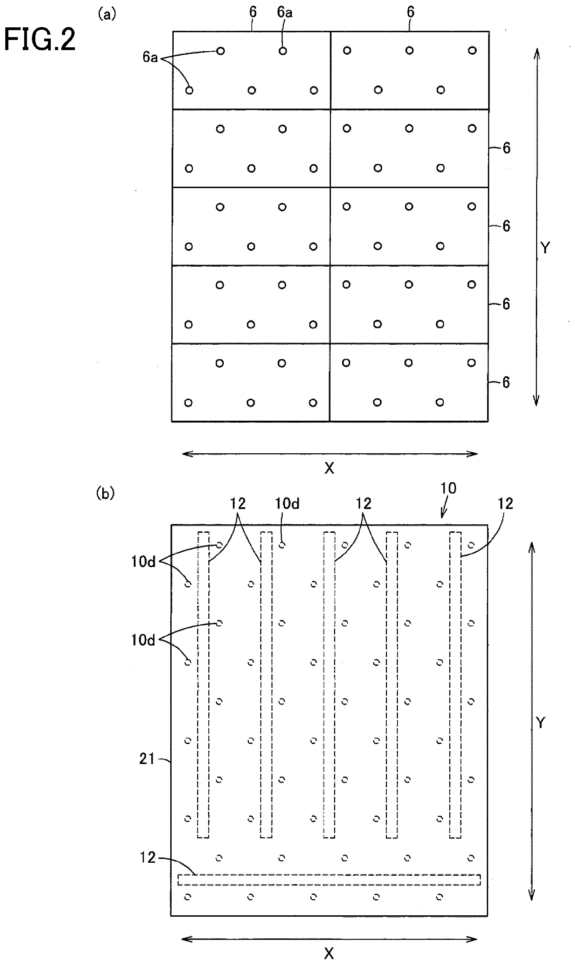

As illustrated in Fig. 1(a), a space 5 is formed in each stage of the cultivation shelf 2, and a cultivation panel 6 in which the plant P is cultivated is placed in the space 5. A plurality of the plants P is arranged on the cultivation panel 6. In the illustrated example, a hole 6a is formed in the cultivation panel 6, and the plant P is disposed in each hole 6a. A plurality of the cultivation panels 6 is disposed in the space 5. In the example illustrated in Fig. 2(a), the cultivation panel 6 is formed in a longitudinal shape in the left-right direction, and two cultivation panels 6 are arranged in the left-right direction and five cultivation panels 6 are arranged in the front□back direction. As an example, there is used the cultivation panel 6 having a size of about 1.2 m in the left-right direction and of about 1.5 m in the front□back direction. In each cultivation panel 6, the holes 6a are arranged spaced apart from each other at equal intervals or approximately equal intervals in each of the front□back direction and the left-right direction, and are arranged in a staggered manner as a whole, a plurality of rows along the front□back direction is formed in the left-right direction, and the positions of the holes 6a in rows adjacent to each other are alternately shifted back and forth. As illustrated in Fig. 1(a), the plant P is disposed in each hole 6a. That is, the arrangement of the plants P is the same as that of the holes 6a. Basically, the plants P of the same kind are disposed on the same cultivation panel 6. In addition, below the cultivation panel 6 inside the space 5 is provided a cultivation pool 8 through which a nutrient solution 7 for hydroponic cultivation flows. One or more cultivation shelves 2 are placed according to factory scale.

Also, the cultivation environment control apparatus 1 includes a holding component 10 disposed in the space 5 of the cultivation shelf 2. The holding component 10 is a holder (retainer) disposed in the space 5 spaced apart above the cultivation panel 6. The holding component 10 is provided movably in up-down direction by an any movement mechanism, and is configured such that the distance to the plant P is adjustable inside the space 5 with respect to the plant P. In the illustrated example, the holding component 10 is suspended by a linear body 11 as a height adjuster with respect to the beam 4, and the distance to the plant P can be adjusted by the adjustment of the length of the linear body 11.

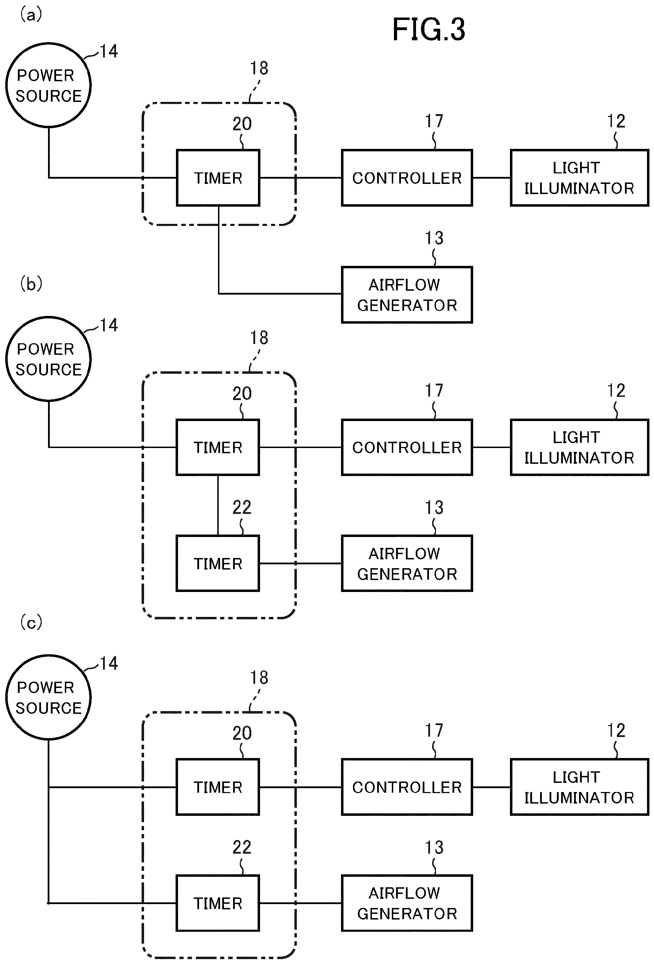

One or more light illuminators 12 configured to irradiate the plant P to be cultivated with light and one or more airflow generators 13 configured to generate airflow in the surrounding space 5 where the plant P is located are disposed detachably and integrally with the holding component 10. That is, the light illuminator 12 and the airflow generator 13 are unitized by the holding component 10. In the present embodiment, a plurality of light illuminators 12 and a plurality of airflow generators 13 are held in one holding component 10. These light illuminators 12 and airflow generators 13 are powered from a power source 14 (Figs. 3(a) to 3(c)) that is an external power source such as a commercial power supply. In the present embodiment, one power source 14 (Figs. 3(a) to 3(c)) is set for each one holding component 10, for example, and the plurality of light illuminators 12 and the plurality of airflow generators 13 held in the holding component 10 are powered from one power source 14 (Figs. 3(a) to 3(c)). That is, one holding component 10, and the plurality of light illuminators 12 and airflow generators 13 held in the holding component 10 form a unit, and each of the unit is powered from the power source 14 (Figs. 3(a) to 3(c)).

The light illuminator 12 irradiates the plant P with light that promotes the growth of the plant P. The light illuminator 12 is a light source or a lamp, and preferably, a light emitting element, for example, an LED is used. The light illuminator 12 includes white light whose color temperature is 3000 K or more or red light whose wavelength is 620 nm or more and 700 nm or less. The light illuminators 12 are held in the holding component 10 with a predetermined gap or more between each other. The light illuminator 12 is formed in a longitudinal shape. In the example illustrated in Fig. 1(b), a plurality of rows, for example, five rows are arranged in the left-right direction with the longitudinal direction being along the front-back direction, and one row is arranged with the front□back direction being along the left-right direction. In the present embodiment, the light illuminator 12 has an outer shell which is cylindrically shaped. In the illustrated example, the light illuminator 12 has a translucent outer shell within which multiple light emitting elements are arranged side by side in the longitudinal direction.

In the present embodiment, the gap between the light illuminators 12 adjacent to each other is set to 1 cm or more. That is, in the illustrated example, the gap between the light illuminators 12 adjacent to each other in the left-right direction and the gap between the light illuminators 12 located at the end in the front□back direction and the plurality of light illuminators 12 arranged in the left-right direction each are 1 cm or more. As illustrated in Fig. 1(a), the holding component 10 is disposed so that the gap between these light illuminators 12 is located above the plant P. The disposition is configured such that one plant P is irradiated with light from the plurality of light illuminators 12. Furthermore, a reflector 15 is disposed between the light illuminator 12 and the holding component 10, that is, on top of the light illuminator 12. The reflector 15 is configured to reflect the light emitted upward from the light illuminator 12 downward to the side of the plant P. In the present embodiment, the reflector 15 is a plate reflector whose cross section is curved in an arc shape along the upside of the light illuminator 12. The light illuminator 12 is attached to the holding component 10 through the intermediary of the reflector 15.

In the present embodiment, the light illuminator 12 is disposed at the bottom of a main body 10a of the holding component 10. The main body 10a is formed in a plate shape. The main body 10a is positioned at a lower end of the holding component 10. The main body 10a is disposed so as to cover the entirety of the cultivation panel 6 disposed in the space 5. In the present embodiment, the main body 10a is formed in a quadrangular shape.

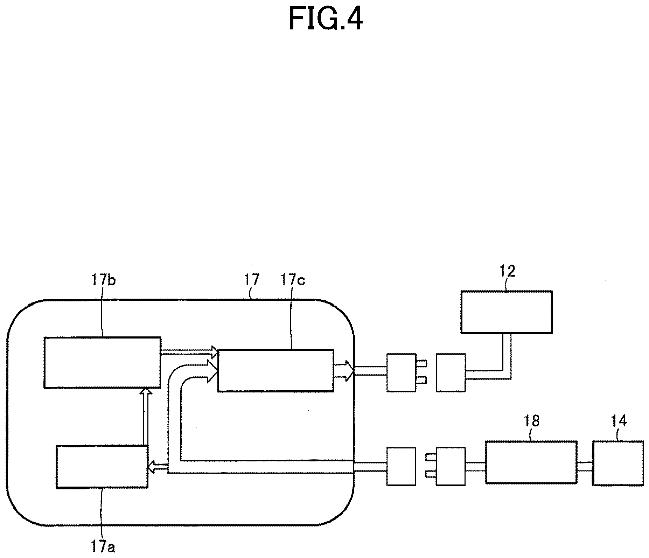

The lighting state of the light illuminator 12 is controlled by a controller 17 illustrated in Fig. 4. The controller 17 is electrically connected to the power source 14 via a control panel 18, and controls power supply from the power source 14 to the light illuminator 12. The controller 17 includes a pulse wave generator including: an RC circuit 17a that is an oscillation circuit for setting a cycle of power supply from the power source 14; an inverter circuit 17b that is a driver circuit for outputting a signal of the cycle set by the RC circuit 17a; and a switch element 17c that is switched in response to the signal outputted from the inverter circuit 17b.

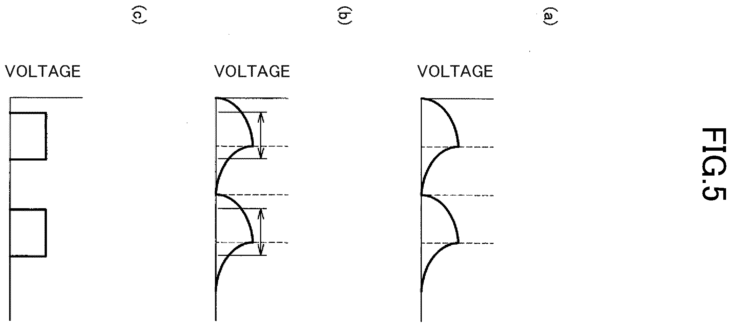

The RC circuit 17a includes: a capacitor of a predetermined capacitance; and a resistor of a predetermined resistance value. As the capacitor, a capacitor of 100 nF, for example, is used. For the resistor, a variable resistor is preferably used, whereby the cycle can be variably set depending on the resistance value. Also, in the RC circuit 17a, the charge-discharge of the capacitor (indicated by the solid line in Fig. 5(a)) is repeated thereby generating a signal for setting the energization period of the inverter circuit 17b.

For the inverter circuit 17b, an inverter IC is preferably used. In the present embodiment, a current is allowed to flow through the inverter circuit 17b in a case where the voltage applied to the capacitor of the RC circuit 17a is 50% or more of the power source voltage (indicated by the solid line and the thin line in Fig. 5(b)). The switch element 17c is switched on and off in response to the current flowing through the inverter circuit 17b.

The switch element 17c has a filtering function and a switch function. For the switch element 17c, a power MOSFET is preferably used. The switch element 17c is turned on only when a current flows through the inverter circuit 17b, thereby turning on and off the voltage supplied from the power source 14 to the light illuminator 12 (indicated by the solid line in Fig. 5(c)).

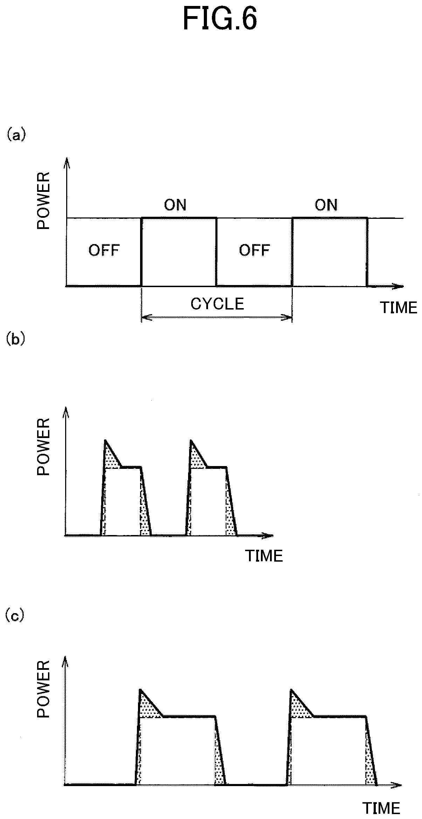

Therefore, in the present embodiment, the light illuminator 12 is intermittently driven by the controller 17. That is, in the microscopic sense, the light illuminator 12 is intermittently controlled by the controller 17. In the present embodiment, the controller 17 is configured to perform PWM control of the light illuminator 12 at a predetermined duty ratio, for example, a duty ratio of 50%. Here, in a case where the light illuminator 12 is an LED in particular, the power consumption is low, and hence a loss occurs at the time of switching such as between before and after turning on or between before and after turning off, whereby the switch loss (shaded portions in Figs. 6(b) and 6(c)) increases as the switching cycle between energization and non-energization is shorter (Fig. 6(b)), and thus, the energy saving effect decreases, and when the switching cycle between energization and non-energization of the light illuminator 12 is longer (Fig. 6(c)), the effect of promoting the growth of the plant P decreases. Therefore, in the present embodiment, the light illuminator 12 is intermittently controlled so as to be energized and non-energized repeatedly at a predetermined cycle of 10 us or more and 20 ms or less, preferably 400 µs or more and 4 ms or less (Fig. 6(a)).

Furthermore, for the controller 17, an operating period and a non-operating period are set in a single day. The operating period for the controller 17 is a period (light period) when this controller 17 intermittently control the light illuminator 12 so as to be energized and non-energized repeatedly from the power source 14, and the light illuminator 12 irradiates the plant P (Fig. 1(a)) with pulsed light. In addition, the operating period for the controller 17 is a period (dark period) when the controller 17 does not control the energization/non-energization from the power source 14 to the light illuminator 12, the light illuminator 12 maintains its light-off state, and the light illuminator 12 does not irradiate the plant P (Fig. 1(a)) with light. In the present embodiment, the power supply period from the power source 14 to the controller 17 is controlled by a timer 20 illustrated in Figs. 3(a) to 3(c). The timer 20 is provided, for example, in a control panel 18. The timer 20 may be, for example, a known time switch, or may be configured by a PLC, a computer, or the like. Therefore, in a macroscopic sense, the light illuminator 12 is intermittently controlled by the timer 20. In the present embodiment, the timer 20 causes the light illuminator 12 to operate for 12 hours to 18 hours in 24 hours as the light period and the remaining time as the dark period.

The airflow generator 13 illustrated in Figs. 1(a) and 1(b) is configured to diffuse vapor produced by transpiration during photosynthesis of the plant P thereby dehumidifying the air. For the airflow generator 13, a motor fan is used. As the airflow generator 13, a blower fan or a compressor may be used. The airflow generator 13 generates airflow from the position of the gap between the light illuminators 12 toward a core as the central portion of the plant P. In the present embodiment, the airflow generator 13 is disposed on the upside of a mounting area 10b of the holding component 10. The mounting area 10b is formed in a plate shape. The mounting area 10b is located at the upper end of the holding component 10. The mounting area 10b is disposed above the main body 10a so as to oppose the main body 10a. The mounting area 10b has its outer edge to which the main body 10a is connected. An air passage 10c communicating with the exhaust side or the intake side of the airflow generator 13 is formed between the mounting area 10b and the main body 10a. The air passage 10c is a ventilation space formed inside the holding component 10. Through the air passage 10c, air flows by the operation of the airflow generator 13. Also, as illustrated in Figs. 2(a) and 2(b), in the holding component 10, an opening 10d is formed at each position facing the hole 6a of the cultivation panel 6. That is, as illustrated in Fig. 1(a), the openings 10d of the same number as the plants P are arranged, and are located above the plants P. The opening 10d is formed penetrating through the main body 10a and communicates with the air passage 10c.

The air passages 10c and the openings 10d form an airflow control mechanism 21 that allows the airflow generator 13 to generate a uniform airflow from the position of the gap between the light illuminators 12 toward the core of the plant P. That is, the airflow control mechanism 21 is a duct having the openings 10d. In the present embodiment, by this airflow control mechanism 21, the airflow generator 13 is allowed by blowing or sucking air to generate airflow at a predetermined speed toward the core of the plant P to be generated. In the illustrated example, the airflow generator 13 can blow a stream of air at a predetermined speed from above the plant P toward the core of the plant P. The predetermined speed is preferably 0.3 m/s or more and 1.5 m/s or less. This is because in a case where the wind speed is less than 0.3 m/s, the vapor diffusion is insufficient and the humidity does not decrease, and in a case where the wind speed is more than 1.5 m/s, the plant P is liable to be blown down or bent due to the airflow. Note that, the direction of blowing a stream of air toward the core of the plant P may be a straight down direction, or an oblique direction.

Furthermore, the airflow generator 13 is intermittently controlled. The intermittent control of the airflow generator 13 may be in synchronization with, or need not be in synchronization with the intermittent control of the light illuminator 12.

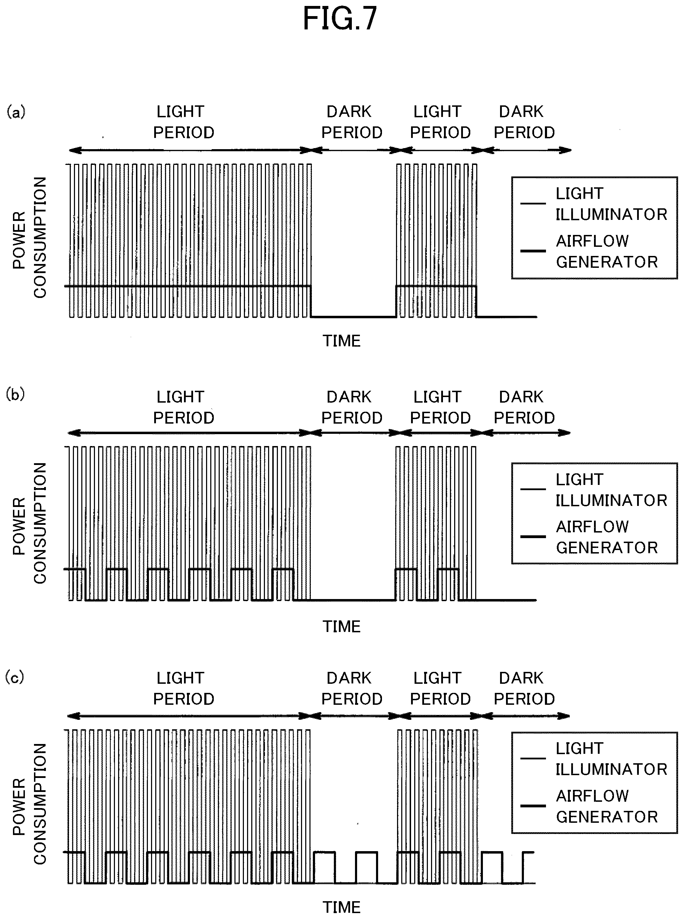

For example, in view of the fact that the plant P mainly activates transpiration in the light period of the light illuminator 12, in a case where the intermittent control of the airflow generator 13 is in synchronization with the intermittent control of the light illuminator 12, the airflow generator 13 is electrically connected in parallel with the controller 17 to the timer 20 as illustrated in Figs. 3(a) and 7(a), whereby the airflow generator 13 may be operated only in the light period of the light illuminator 12 and the airflow generator 13 may be stopped in the dark period of the light illuminator 12; or by using another timer 22 electrically connected in series with the timer 20 to the power source 14 as illustrated in Figs. 3(b) and 7(b), the airflow generator 13 may be intermittently controlled separately from the light illuminator 12 in the light period of the light illuminator 12, and the light illuminator 12 may be stopped in the dark period, thereby minimizing the airflow necessary for diffusing the humidity around the plant P (Fig. 1(a)), which is generated by the transpiration of the plant P (Fig. 1(a)). In this case, the initial cost is smaller in the configuration illustrated in Figs. 3(a) and 7(a); whereas the running cost is smaller in the configuration illustrated in Figs. 3(b) and 7(b).

On the other hand, in view of the fact that the plant P (Fig. 1(a)) transpires to some extent even in the dark period of the light illuminator 12, in a case where the intermittent control of the airflow generator 13 is not in synchronization with the intermittent control of the light illuminator 12, another timer 22 electrically connected in parallel with the timer 20 to the power source 14 is used as illustrated in Figs. 3(c) and 7(c), whereby the airflow generator 13 may be intermittently controlled separately from the light illuminators 12 throughout the light and dark periods of the light illuminators 12. In this case, the humidity is more reliably kept constant even in the dark period of the light illuminator 12, and further improvement of the quality of the plant P is expected as compared with the configurations illustrated in Figs. 3(a) and 7(a) and the configurations illustrated in Figs. 3(b) and 7(b).

Next, an operation of the first embodiment will be described.

The cultivation environment control apparatus 1 causes the controller 17 to intermittently supply power from the power source 14 to the light illuminator 12, thereby irradiating the plant P with necessary light while the light illuminator 12 being energized and non-energized repeatedly at a predetermined cycle. That is, the light illuminator 12 irradiates the plant P with pulsed light of a predetermined cycle. Note that, in the light illuminator 12, the power supply period from the power source 14 to the controller 17 is controlled by the timer 20, thereby setting a light period when the light illuminator 12 irradiates the plant P with light while being energized and non-energized repeatedly and a dark period when the plant P is not irradiated with light.

In this way, the light illuminator 12 is intermittently controlled, whereby heat generation from the light illuminator 12 is reduced by 40% to 50%. For this reason, the operation time of the air conditioner is reduced, and thus the humidity in the space 5 increases. When a dehumidifier is used in order to suppress an increased humidity in the space 5, it consumes energy and a power cost increases.

Therefore, the power supply from the power source 14 is controlled by the timer 20 and/or the timer 22, whereby the airflow generator 13 is intermittently controlled. The operation of the airflow generator 13 causes the airflow control mechanism 21 to generate airflow at a predetermined speed toward the core of the plant P, thereby diffusing vapor produced by transpiration of the plant P, and enabling to suppress an increased humidity in the surrounding space 5 due to decreased operation time of the air conditioner associated with a decreased heat generation of the light illuminator 12.

Also, the growth of the plant P and the reduction of tip burn are promoted by the air blowing by the airflow generator 13, and at the same time, the energy consumption of the cultivation environment control apparatus 1 in terms of the air blowing including the airflow generator 13 and the light illuminator 12 is reduced, and a deterioration in the cultivation plant quality caused by an increased humidity due to a decreased heat supply of the light illuminator 12 is prevented without a significant increase in energy consumption. In addition, the heights of the light illuminator 12 and the airflow generator 13 are configured to be adjustable by the holding component 10, thereby enabling to deal with plants P having different sizes and shapes.

As described above, according to the present embodiment, the light illuminator 12 and the airflow generator 13 are intermittently operated, whereby light necessary for the growth of the plant P is emitted from the light illuminator 12 while the light illuminator 12 and the airflow generator 13 each are operated with low energy consumption, and the humidity environment is adjusted by the airflow generated by the airflow generator 13, so that the energy consumption can be reduced while securing the quality of the plant P.

In addition, since the light illuminator 12 and the airflow generator 13 are unitized, there is a high extensibility, the light irradiation and the airflow supply can be easily adjusted in accordance with the kind of the plant P, and there is no need for significant addition or modification of the apparatus after implementation.

Since the distance between the plant P and the holding component for holding the light illuminator 12 and the airflow generator 13 is configured to be adjustable, the irradiation condition of light from the light illuminator 12 in accordance with the plant P of various kinds, sizes, and shapes, and the condition of the airflow generated by the airflow generator 13 can be set according to the height of the holding component 10, so that the quality of the plant P can be improved.

By using the gap between the light illuminators 12, the airflow control mechanism 21 allows the airflow generator 13 to generate the airflow toward the core of the plant P, thereby moving the air in the vicinity of the growth point where the humidity tends to increase in the plant P to be cultivated, and effectively promoting transpiration of the plant P and the calcium advection to the leaf tip. For this reason, the growth of the plant P can be promoted by the air movement and the calcium advection, and the risk of the occurrence of mold and tip burn can be reduced.

Furthermore, the airflow generator 13 is adjusted so that the speed of the airflow occurred at the core portion of the plant P is 0.3 m/s or more and 1.5 m/s or less, and this airflow generator 13 is intermittently controlled, whereby the vapor can be reliably diffused without allowing the airflow to blow down or bend the plant P, so that the growth of the plant P can be effectively promoted, and the risk of the occurrence of mold and tip burn can be significantly reduced.

The light illuminator 12 includes white light whose color temperature is 3000 K or more or red light whose wavelength is 620 nm or more and 700 nm or less, and one cycle time of energization and non-energization from the power source 14 is set to 10 us or more and 20 ms or less, so that the energy consumption can be reduced without decreasing the growth rate of the plant P. In particular, the LED is excellent in on-off responsiveness, and hence a short-cycle on-off control is enabled. The controller 17 takes advantages of an alternating current frequency and waveform or an oscillation circuit such as an RC circuit to create an any electric waveform, which is passed through a power semiconductor having a filtering function and a switch function thereby enabling to configure a structure in which power consumption does not occur including the light illuminator 12 when being non-energized.

A motor fan is used as the airflow generator 13, whereby the energy consumption can be significantly reduced as compared with case of using a general dehumidifier, and the operation of the airflow generator 13 is intermittently performed within a range not affecting the growth of the plant P, so that the energy consumption can be further suppressed.

As a result of this, the profitability of plant factories can be improved by the increased productivity of the plant P and the cost reduction.

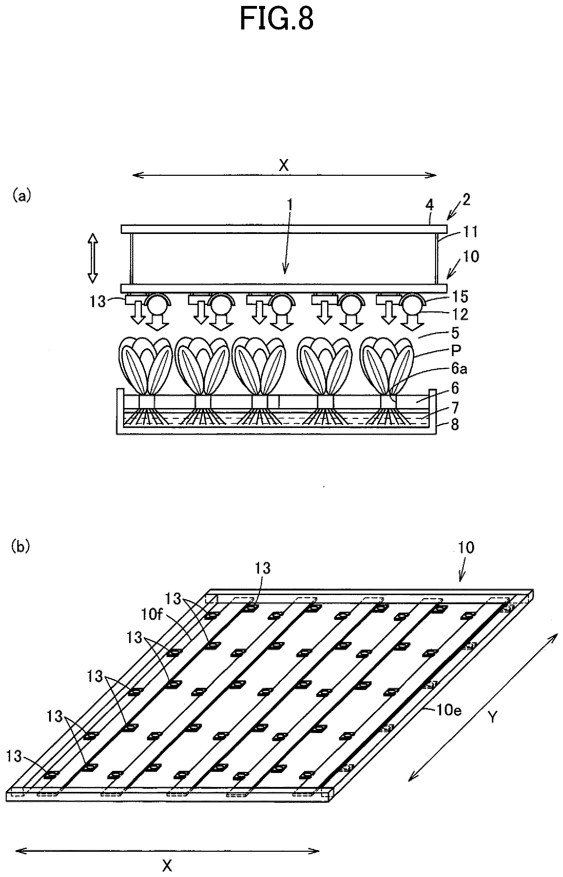

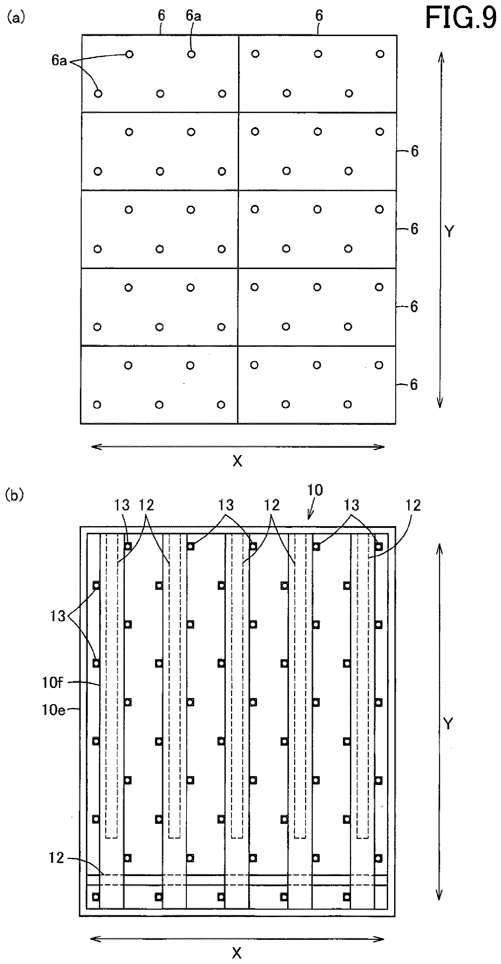

Next, a second embodiment of the present invention will be described with reference to Figs. 8 and 9.

In a cultivation environment control apparatus 1 of the present embodiment, a light illuminator 12 and an airflow generator 13 each are held under a holding component 10.

As shown in Fig. 8(b), a plurality of the airflow generators 13 is fixed to the holding component 10 formed in a frame shape. The holding component 10 includes: an outer frame 10e having a quadrangular frame shape; and a plurality of frames 10f formed along a predetermined direction, that is, along the front□back direction in the outer frame 10e in the present embodiment. The airflow generators 13 each are attached to both sides of each frame 10f. The light illuminator 12 is attached downward relative to the frame 10f.

As illustrated in Figs. 9(a) and 9(b), the airflow generators 13 each are disposed at a position corresponding to a hole 6a. Therefore, as illustrated in Fig. 8(a), the airflow generator 13 is disposed above the core of each plant P. That is, in the present embodiment, there are disposed the airflow generators 13 of the same number as the plants P. These airflow generators 13 each are electrically connected in parallel to a power source 14.

Note that, other configurations of the cultivation environment control apparatus 1 according to the second embodiment are basically the same as those of the first embodiment.

Also, the cultivation environment control apparatus 1 has the same configuration as that of the first embodiment, such as the intermittent control of the light illuminator 12 and the airflow generator 13, and thus there can be achieved the same operation and effects as those of the first embodiment, for example, the energy consumption can be reduced, there is no need for significant addition or modification of the apparatus after implementation, and the like.

The airflow generator 13 is disposed for each core of the plant P, and hence the operation of the airflow generator 13 is controlled in accordance with the state of each plant P, thereby enabling to generate airflow suitable for each plant P.

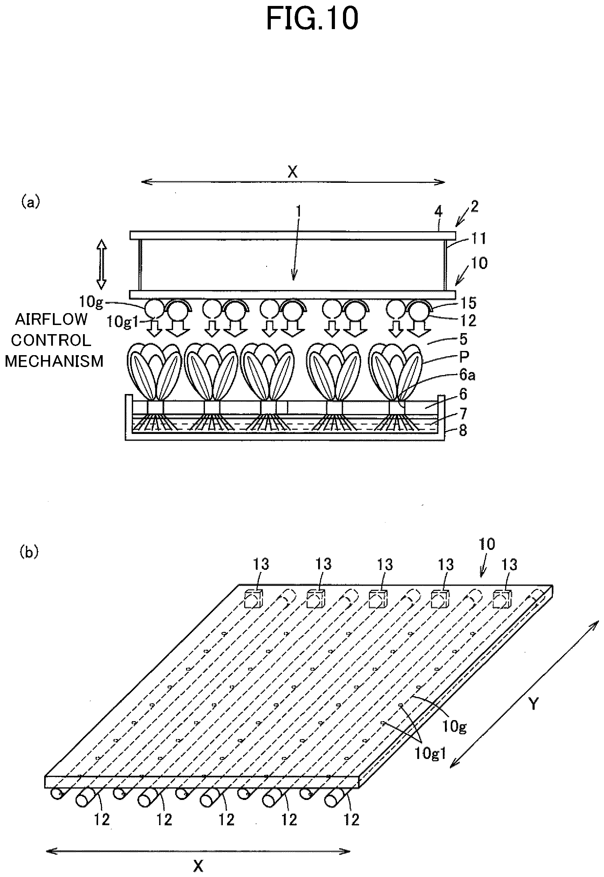

Next, a third embodiment of the present invention will be described with reference to Fig. 10.

A cultivation environment control apparatus 1 of the present embodiment is configured to include a holding component 10 at the bottom of which a light illuminator 12 and an airflow generator 13 each are held.

As illustrated in Fig. 10(a), the light illuminator 12 is held at the bottom of the holding component 10 basically same as in the first embodiment.

As illustrated in Fig. 10(b), the airflow generator 13 is held at an end of an air guide 10g that is an airflow control mechanism attached to a gap between the light illuminators 12 at the bottom of the holding component 10.

The air guide 10g is formed in a longitudinal shape in the front□back direction. The air guide 10g is a duct or a tube formed in a tubular shape with one end closed, that is, in a cylindrical shape in the present embodiment. The airflow generator 13 is attached to the other end of the air guide 10g. The air guide 10g has its bottom where an opening 10g1 is formed. The opening 10g1 is located corresponding to the core of a plant P. That is, in the present embodiment, there are disposed the openings 10g1 of the same number as the plants P. The airflow generators 13 each are electrically connected in parallel to each light illuminator 12. One airflow generator 13 may be provided for one air guide 10g, or may be provided for a plurality of the air guides 10g.

Note that other configurations of the cultivation environment control apparatus 1 according to the third embodiment are basically the same as those of the first embodiment.

Also, the cultivation environment control apparatus 1 has the same configuration as that of the first embodiment, such as the intermittent control of the light illuminator 12 and the airflow generator 13, and thus there can be achieved the same operation and effects as those of the first embodiment, for example, the energy consumption can be reduced, there is no need for significant addition or modification of the apparatus after implementation, and the like.

Only the replacement of the air guide 10g with one that has openings 10g1 at different positions enables to easily deal with the different arrangement of the plant P.

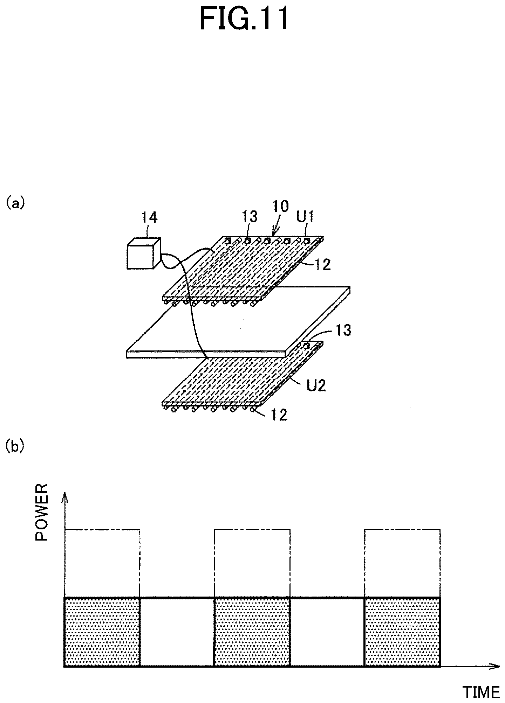

Next, a fourth embodiment of the present invention will be described with reference to Fig. 11.

In a cultivation environment control apparatus 1 of the present embodiment, a single power source 14 is connected to each pair of holding components 10.

That is, as illustrated in Fig. 11(a), the holding component is configured such that one or more holding components 10 are included in one unit U1 and holding components 10 of the same number as the unit U1 are included in another unit U2, and light illuminators 12 attached to the holding components 10 included in one unit and light illuminators 12 attached to the holding components 10 included in another unit are alternately powered from an identical power source 14 at a predetermined cycle. Therefore, in the present embodiment, there is configured a unit structure where in each segment having a fixed area the plurality of light illuminators 12 is allowed to receive power supply from one power source 14 and is synchronized in energization and non-energization.

In the power source 14, during a period (the shaded portion in Fig. 11(b)) when power is supplied to the light illuminator 12 attached to the holding components 10 included in one unit, the light illuminator 12 attached to the holding components 10 included in another unit are non-energized, and during a period (the outlined portion in Fig. 11(b)) in which power is supplied to the light illuminator 12 attached to the holding components 10 included in another unit, the light illuminators 12 attached to the holding components 10 included in one unit are non-energized. To say it in another way, the energization period and non-energization period in the light illuminators 12 attached to the holding components 10 included in one unit and those in the light illuminators 12 attached to the holding components 10 included in another unit are inversely synchronized.

The changeover of these periods is realized, in place of a controller 17, in selective switching by a switching circuit to which a plurality of the light illuminators 12 is connected in parallel.

An airflow generator 13 is electrically connected to a timer 20 or a timer 22 thereby enabling to be intermittently controlled separately from the light illuminator 12.

Note that other configurations of the cultivation environment control apparatus 1 according to the fourth embodiment are basically the same as those of the third embodiment.

Also, the cultivation environment control apparatus 1 has the same configuration as that of the first embodiment, such as the intermittent control of the light illuminator 12 and the airflow generator 13, and thus there can be achieved the same operation and effects as those of the first embodiment, for example, the energy consumption can be reduced, there is no need for significant addition or modification of the apparatus after implementation, and the like.

In a case where energization and non-energization for the plurality of units including the light illuminators 12 are separately controlled by their individual power supplies, if these cycles overlap, then an instantaneous power consumption increases (e.g., the long dashed double-dotted line in Fig. 11(b)), which results in an increased power cost. According to the present embodiment, one unit of the light illuminators 12 and another unit of the light illuminators 12 are alternately powered at a predetermined cycle from an identical power source 14, whereby there is no overlapping of the cycles of energization and non-energization in one unit of the light illuminators 12 and another unit of the light illuminators 12, so that the instantaneous power consumption can be reduced, and the power cost can be reduced.

Furthermore, a unit structure is configured such that in each segment having a fixed area the plurality of light illuminators 12 is allowed to receive power supply from one power source 14 and is synchronized in energization and non-energization, so that as many plants P as possible can be irradiated with synchronized pulsed light within a range of restriction of the electric capacity and the installation location.

Note that, in each of the above embodiments, the light illuminator 12 and the airflow controller 13 are configured to be intermittent controlled, that is, to be switched between being energized and non-energized, but the present invention is not limited thereto, and the intensities of the light illuminator 12 and the airflow controller 13 may be configured to be controlled.

### Reference Signs List

- 1: Cultivation environment control apparatus
- 10: Holding component
- 10g: Air guide as an airflow control mechanism
- 12: Light illuminator
- 13: Airflow generator
- 14: Power source
- 17: Controller
- 21: Airflow control mechanism
- P: Plant

## Claims

1. A cultivation environment control apparatus comprising:
a light illuminator configured to irradiate a plant with light; and
an airflow generator configured to generate airflow around the plant,
the cultivation environment control apparatus being **characterized in that** the light illuminator and the airflow generator are intermittently controlled or intensity controlled.

2. The cultivation environment control apparatus according to claim 1, comprising:
a holding component configured to hold the light illuminator and the airflow generator,
wherein a distance between the holding component and the plant is adjustable.

3. The cultivation environment control apparatus according to claim 1 or 2, wherein
a plurality of the light illuminators is arranged with a gap between each other, and
the cultivation environment control apparatus comprises an airflow control mechanism configured by using the gap to allow the airflow generator to generate airflow toward a core of the plant.

4. The cultivation environment control apparatus according to claim 3, wherein
the airflow generator is allowed by the airflow control mechanism to generate airflow at a predetermined speed of 0.3 m/s or more and 1.5 m/s or less toward a core of the plant.

5. The cultivation environment control apparatus according to any one of claims 1 to 4, wherein
the light illuminator includes: white light whose color temperature is 3000 K or more; or red light whose wavelength is 620 nm or more and 700 nm or less, and
the cultivation environment control apparatus comprises a controller configured to intermittently control the light illuminator so as to be energized and non-energized repeatedly at a predetermined cycle of 10 us or more and 20 ms or less.

6. The cultivation environment control apparatus according to any one of claims 1 to 5, wherein
the light illuminators are arranged in pairs, and
the light illuminator of one of the pair and the light illuminator of the other of the pair are alternately powered from an identical power supply.
